# EUROPEAN PATENT APPLICATION

(11) **EP 4 557 439 A1**
(43) Date of publication of application: **21.05.2025**
(21) Application number: 24815747.1
(22) Date of filing: 16.05.2024
(51) Int. Cl.: H01M 10/0583, H01M 10/04, H01M 10/052, H01M 4/134, H01M 50/531, H01M 4/02

(54) **ELECTRODE ASSEMBLY AND ELECTROCHEMICAL DEVICE INCLUDING SAME**

(30) Priority: 26.05.2023 KR 20230068571
(71) Applicant: LG Energy Solution, Ltd., Seoul 07335 (KR)
(72) Inventor: KIM, Ki Tae, Daejeon 34122 (KR); LEE, Junghoon, Daejeon 34122 (KR); KWON, Soon Kwan, Daejeon 34122 (KR); HAN, Suenghoon, Daejeon 34122 (KR)
(74) Representative: Goddar, Heinz J.
(86) International application number: PCT/KR2024/006646
(87) International publication number: WO 2024/248369

(57) **Abstract**

An electrode assembly including a positive electrode, a negative electrode, and a separator is provided. In the electrode assembly, the negative electrode comprises lithium metal and is interposed between two notched separators to form a negative electrode structure. The electrode assembly includes a negative electrode structure and a positive electrode alternately stacked. In the negative electrode structure, the negative electrode is exposed to the outside through the notching area of the separator. The electrode assembly according to one embodiment of the present invention can form a tab without cutting or welding of the negative electrode, which not only improves processability, but also has a stable structure, and thus has the effect of improving the performance of the battery.

## Description

### [Technical Field]

The present invention relates to an electrode assembly and an electrochemical device comprising the same. More particularly, it relates to an electrode assembly comprising a negative electrode interposed between two notched separators and an electrochemical device comprising the same.

This application claims the benefit of priority to Korean Patent Application No. 10-2023-0068571, filed May 26, 2023, the disclosure of which is incorporated herein by reference in its entirety.

### [Related Art]

In recent years, there has been a growing interest in energy storage technologies. Research and development efforts for batteries are taking shape as their applications expand to include cell phones, camcorders and notebook PCs, and even energy for electric vehicles. Electrochemical devices are one of the most prominent fields, and especially with the recent trend toward miniaturization and lightweight electronics, the development of secondary batteries as small, lightweight, and high-capacity rechargeable batteries has become a focus of interest.

Secondary batteries are also categorized according to the structure of the electrode assembly of the positive electrode/separator/negative electrode structure. For example, electrode assemblies are categorized into jelly-roll (wound) electrode assemblies, which are long sheets of positive electrodes and negative electrodes wound together with a separator, and stacked electrode assemblies, which are multiple positive electrodes and negative electrodes cut into predetermined size units and stacked sequentially with a separator.

However, these conventional electrode assemblies have several problems.

First, the jelly-roll electrode assembly is made by winding the long sheets of positive electrode and negative electrode in a dense state to form a cylindrical or elliptical structure in cross-section. In such a structure, stresses caused by expansion and contraction of the electrodes during charge and discharge accumulate inside the electrode assembly, and when such stress accumulation exceeds a certain limit, deformation of the electrode assembly occurs. Furthermore, the deformation of the electrode assembly may cause uneven spacing between the electrodes, which may cause a sharp decrease in the performance of the battery, and may cause an internal short circuit, which may jeopardize the safety of the battery. Furthermore, since the above jelly-roll electrode assembly requires winding of the long sheets of the positive electrode and negative electrode, it is difficult to wind the positive electrode and negative electrode quickly while maintaining a constant spacing between the electrodes, resulting in a decrease in productivity.

Second, the stackable electrode assembly requires sequential stacking of a plurality of positive electrode and negative electrode units. At this time, the stackable electrode assembly has the problem of low productivity because a separate electrode plate transfer process is required to manufacture the units, and the sequential stacking process requires a lot of time and effort.

In order to solve these problems, a stack-folding electrode assembly with an advanced structure that is a hybrid of the jelly-roll type and the stack type has been developed. The stack-folding electrode assembly has a structure in which bi-cells or full cells stacked with a separator interposed between the positive electrode and negative electrode of a predetermined unit are wound using a long continuous separator sheet (folding separator).

The stack-folding electrode assembly connects the electrodes of each layer by extending a separator, which is generally easier to fold than the electrodes. In this case, the electrodes of each layer are fed to form the electrode assembly in a cut state, as in the stackable electrode assembly. If the secondary battery is composed of only electrode materials that are not easily cut or folded among the various electrode materials constituting a secondary battery in the art, this general stack-folding electrode assembly is more suitable. On the other hand, lithium metal, which is well known as a negative electrode material for secondary batteries in the art, may not be suitable for conventional stack-folding electrode assemblies due to its physical properties including great ductility and viscosity, which make it difficult to process, such as cutting, and relatively easy to fold.

After continuous research on the structure of the electrode assembly, the inventor of the present invention has designed a structure suitable for forming a negative electrode tab in a stack-folding electrode assembly of a new structure utilizing a negative electrode structure containing lithium metal interposed between two separators, and has completed the present invention.

### [Prior Art Reference]

### [Patent Reference]

(Patent Reference 1) Korean Patent No. 2023530

### [Detailed Description of the Invention]

### [Technical Problem]

The present invention aims to provide a stack-folding electrode assembly of a new structure utilizing a negative electrode structure comprising a negative electrode comprising lithium metal interposed between two separators, an electrode assembly having a structure suitable for forming a negative electrode tab, and an electrochemical device comprising the same.

### [Technical Solution]

According to a first aspect of the present invention, the present invention provides an electrode assembly comprising a positive electrode, a negative electrode, and a separator.

In one embodiment of the present invention, the negative electrode comprises lithium metal and is interposed between two notched separators to form a negative electrode structure.

In one embodiment of the present invention, the electrode assembly comprises a negative electrode structure and a positive electrode which are alternately stacked.

In one embodiment of the present invention, in the negative electrode structure, the negative electrode is exposed to the outside through a notching area of the separator.

In one embodiment of the present invention, the notching areas are present in each layer of negative electrode structures in a structure in which negative electrode structures and positive electrodes are alternately stacked, and the notching areas of each layer are located side by side in the height direction of the electrode assembly.

In one embodiment of the present invention, the positive electrode comprises a positive electrode tab that protrudes above the negative electrode structure.

In one embodiment of the present invention, the notching area has a rectangular shape.

In one embodiment of the present invention, the length of the notching area is at least 1.5 times the length of the positive electrode tab.

In one embodiment of the present invention, the notching area is located at only one end of both ends in the width direction of the negative electrode structure.

In one embodiment of the present invention, the positive electrode tab is located in the same direction as the notching area relative to the width direction of the electrode assembly, and the positive electrode tab does not overlap the notching area relative to the height direction of the electrode assembly.

In one embodiment of the present invention, the positive electrode tab is located in an opposite direction to the notching area relative to the width direction of the electrode assembly, and the positive electrode tab is located side-by-side with the notching area in the width direction of the electrode assembly.

In one embodiment of the present invention, the electrode assembly includes a single negative electrode structure and a plurality of positive electrodes.

In one embodiment of the present invention, the negative electrode structure includes a plurality of stack portions and a plurality of folding portions.

In one embodiment of the present invention, the stack and folding portions of the negative electrode structure are alternately positioned.

In one embodiment of the present invention, the electrode assembly comprises a stack portion of a negative electrode structure and positive electrodes stacked alternately and sequentially.

In one embodiment of the present invention, the notching area extends in the longitudinal direction of the negative electrode structure and extends from one stack portion to another proximate stack portion.

In one embodiment of the present invention, the length of the notching area in the stack portion of the negative electrode structure is 70% or less of the length of the stack portion.

According to a second aspect of the present invention, the present invention provides an electrochemical device comprising the electrode assembly described above.

In one embodiment of the present invention, the electrochemical device is a lithium secondary battery.

### [Advantageous Effects]

An electrode assembly according to one embodiment of the present invention may utilize a negative electrode structure in which a negative electrode comprising lithium metal is interposed between two notched separators to manufacture the electrode assembly, thereby minimizing cutting of the lithium metal and thereby improving process efficiency in manufacturing the electrode assembly.

In addition, the structure can form a negative electrode tab without additional cutting or welding of the lithium metal, so that the fabricated electrode assembly not only has a stable structure but also improves the performance of the battery.

### [Brief Description of Drawing]

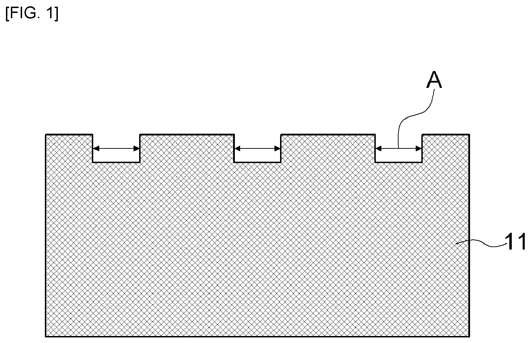

FIG. 1 is a schematic plan view of a notched separator according to one embodiment of the present invention.

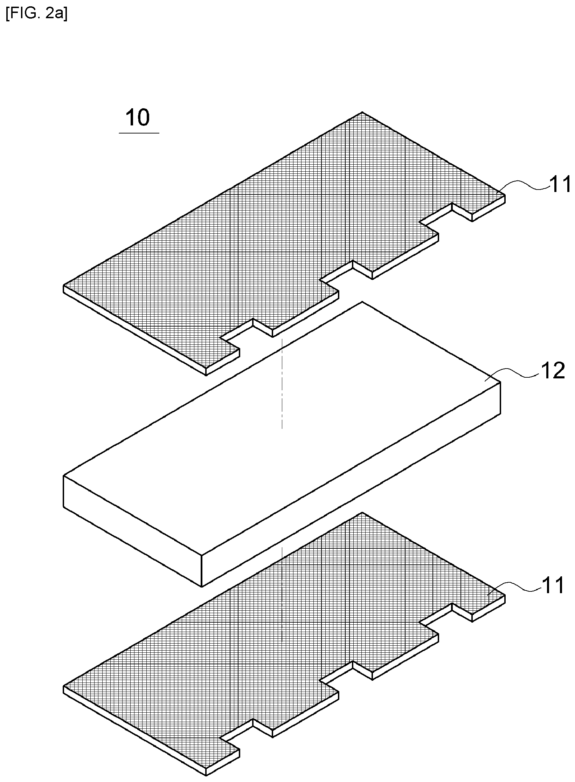

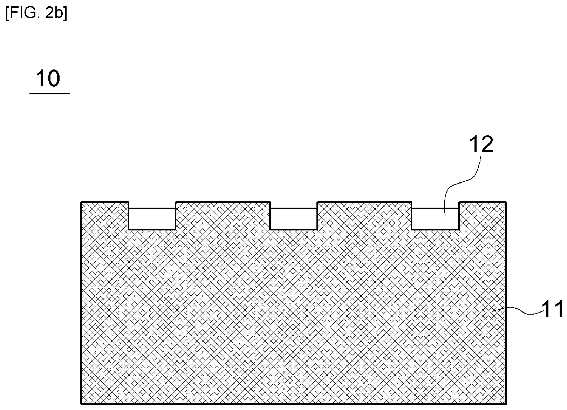

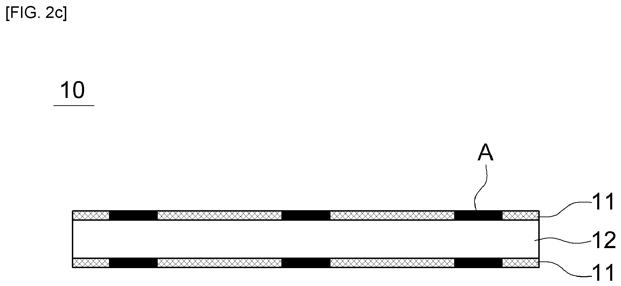

FIG. 2 is a schematic drawing of a negative electrode structure according to one embodiment of the present invention. FIG. 2a is a perspective view schematically illustrating an isolated view of each layer of a negative electrode structure according to one embodiment of the present invention. FIG. 2b is a plan view schematically illustrating a negative electrode structure according to one embodiment of the present invention. FIG. 2c is a front view schematically illustrating a negative electrode structure according to one embodiment of the present invention.

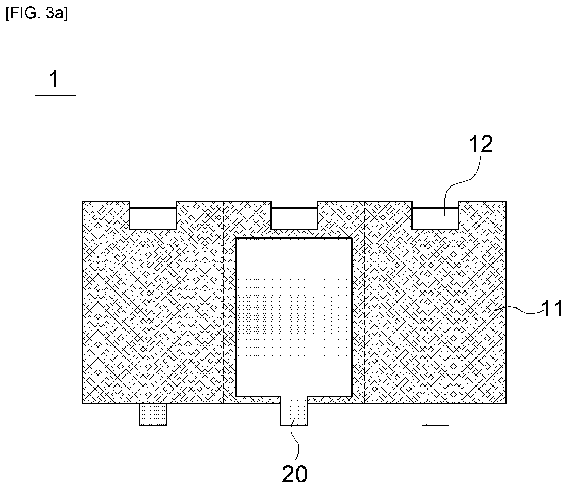

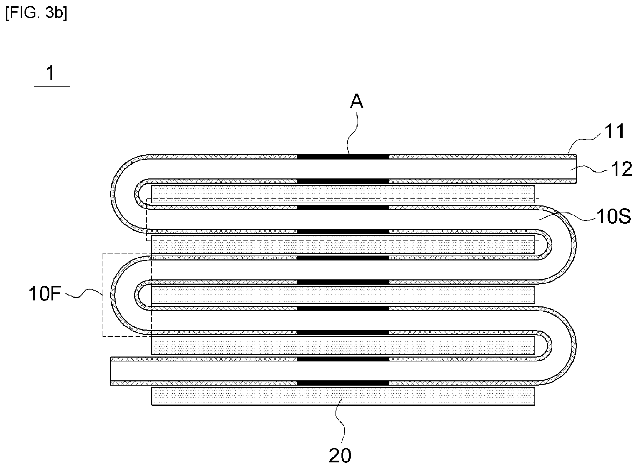

FIGs. 3 to 6 are drawings schematically illustrating the positions of a negative electrode structure and a positive electrode in an electrode assembly according to one embodiment of the present invention. FIGs. 3a to 6a are plan views schematically illustrating the position of the positive electrode on the negative electrode structure by unfolding a folding portion of the negative electrode structure in an electrode assembly according to one embodiment of the present invention. FIGs. 3b to 6b are front views schematically illustrating an electrode assembly having the same arrangement as in FIGs. 3a to 6a.

### [Best Mode]

Embodiments are described in detail below with exemplary drawings. It should be noted that in assigning reference numerals to the components in each drawing, the same components are given the same numerals as far as possible, even if they are shown in different drawings. In addition, in describing embodiments, detailed descriptions of related known configurations or features are omitted if it is determined that such detailed description would impede understanding of the embodiments.

In addition, terms such as first, second, A, B, (a), (b), and the like may be used to describe components of the embodiments. These terms are intended only to distinguish one component from another, and the nature, sequence, or order of the components is not limited by the terms. When a component is described as being "connected," "coupled," or "connected to" another component, it is to be understood that the component may be directly connected or connected to the other component, but that another component may be "connected," "coupled," or "connected" between each component.

Components included in one embodiment, and components having common features, are described using the same designations in other embodiments. Unless otherwise indicated, the description of one embodiment is applicable to other embodiments, and repeated descriptions are omitted.

As used herein, "longitudinal direction" refers to the left and right directions in plan views such as FIGs. 1, 2b, 3a, 4a, 5a, and 6a, and in frontal views such as FIGs. 2c, 3b, 4b, 5b, and 6b. As used herein, "width direction" refers to an up and down direction in plan views such as FIGs. 1, 2b, 3a, 4a, 5a, and 6a, and an indistinguishable front to back direction in frontal views such as FIGs. 2c, 3b, 4b, 5b, and 6b. In this specification, "height direction" refers to an indistinguishable front to back direction in plan views such as FIGs. 1, 2b, 3a, 4a, 5a, and 6a, and an up and down direction in frontal views such as FIGs. 2c, 3b, 4b, 5b, and 6b.

The present invention relates to an electrode assembly, and provides a novel structured stack-folding electrode assembly utilizing a negative electrode structure comprising a negative electrode comprising lithium metal interposed between two separators, with a structure suitable for forming a negative electrode tab. The electrode assembly according to one embodiment of the present invention can minimize the cutting of lithium metal during manufacturing, thereby improving process efficiency. Furthermore, in practical application of the electrode assembly, since a negative electrode tab can be formed without additional cutting or welding of the lithium metal, defects that may occur due to processing of the lithium metal are reduced, the manufactured product has a reliable and stable structure, and the performance of the battery can be improved accordingly.

An electrode assembly according to one embodiment of the present invention comprises a positive electrode, a negative electrode and a separator. In the electrode assembly, the positive electrode and separator are not particularly limited, as long as they are materials commonly used in the art, but the negative electrode comprises lithium metal. Lithium metal as used herein can be broadly construed to mean any lithium metal, even if it is in the form of a lithium added with some component or an alloy with some metal, provided that its properties are not so different from lithium metal that the same problems can be encountered when applied to a conventional electrode assembly as lithium metal.

According to one embodiment of the present invention, the negative electrode is interposed between two notched separators to form a negative electrode structure. Here, notching of the separator refers to the process of cutting away a portion of the separator in the negative electrode structure to expose the negative electrode located on the inside of the separator to the outside to manufacture a negative electrode tab. The two notched separators have a substantially symmetrical structure, and accordingly, the location and number of notching portions, the shape of the notched area, and the like are described herein with reference to one separator. To provide a better understanding of the structure of the notched separator, FIG. 1 provides a top view schematically illustrating a notched separator according to one embodiment of the present invention. The plan view shows the separator from above, and the separator according to one embodiment of the present invention has a longitudinally elongated structure.

In the drawings of this specification, such as FIG. 1, "notching portion" is referred to as A, and the notching portion (A) refers to the solid shape removed by notching, and accordingly, the notching portion (A) is also identified in a frontal view, such as FIG. 2c. On the other hand, as used herein, "notching area" refers to the cross-section shape removed by notching, which has a length direction and a width direction, but no height direction. Accordingly, the notching area is identified in a plan view such as FIG. 1, but it is not identified in a front view such as FIG. 2c.

The location of the notching portion (A) in the separator (11) is not particularly limited, as long as it can function as a negative electrode tap by exposing the negative electrode to the outside of the fabricated electrode assembly. However, in an electrode assembly having a stacked positive electrode and negative electrode structure, it may be desirable that the negative electrode structure protrudes further than the positive electrode in order to expose the negative electrode to the outside, and that the notching portion (A) is formed on the protruding negative electrode structure. According to one embodiment of the present invention, the notching portion (A) is located at an end in the width direction of the negative electrode structure. Furthermore, the number of notching portions (A) in the separator (11) is not particularly limited. However, in a laminated structure of a negative electrode structure and a positive electrode, it may be desirable that one or more notching portions (A) are formed in one layer of the negative electrode structure. FIG. 1 is an exemplary structure of a notched separator, and the separator may be shortened in the longitudinal direction such that one or two notching portions (A) are formed in one separator, or the separator may be extended in the longitudinal direction such that four or more notching portions (A) are formed in one separator.

To provide a better understanding of the structure of a negative electrode structure having a negative electrode interposed between two notched separators, FIG. 2 provides a schematic drawing of a negative electrode structure according to one embodiment of the present invention. Specifically, FIG. 2a provides a view of each layer of the negative electrode structure, and FIGs. 2b and 2c provide views of the negative electrode structure from different positions looking at the negative electrode structure. As shown in FIGs. 2a and 2c, the upper separator (11) and the lower separator (11) have a substantially symmetrical structure with respect to the negative electrode (12), so that the negative electrode is exposed at the top and bottom simultaneously. In the electrode assembly according to one embodiment of the present invention, the positive electrode (20), the negative electrode (12), and the separator (11) have a structure in which the positive electrode, the negative electrode, and the separator are all exposed when viewed from the front, as shown in FIG. 3b, so that the negative electrode is exposed upwardly and downwardly by notching the separator, which has technical significance in the present invention. Since the separator (11) completely separates the positive electrode (20) and the negative electrode (12) to prevent an electrical short from occurring when the battery is driven, the width of the separator (11) may be the same as or longer than the width of the negative electrode. Thus, as shown in FIG. 2b, the negative electrode (12) is not exposed unless the separator (11) is notched. The upper and lower exposed portions of the negative electrode are referred to herein as negative electrode tabs.

According to one embodiment of the present invention, the electrode assembly (1) comprises a structure in which the negative electrode structure (10) and the positive electrode (20) are alternately stacked. In such a structure, the positive electrodes (20) located at the top and bottom of the negative electrode structure (10) may also prevent the negative electrode (12) from being exposed to the outside. Therefore, in order for the negative electrode (12) in the electrode assembly (1) to be exposed to the outside, the negative electrode structure (10) in the stacked structure must protrude in a width or length direction more than the positive electrode (20), and a notching portion (A) must be formed in the protruding portion to allow the negative electrode (12) to be exposed to the outside. According to one embodiment of the present invention, in the negative electrode structure (10), the negative electrode (12) is exposed to the outside through the notching area of the separator (11). It may be expressed that the negative electrode (12) is exposed to the outside by the notching area because the negative electrode (12) is exposed to the outside by the notching portion (A), but the thickness at which the separator (11) is notched is not particularly relevant to the exposure of the negative electrode (12).

According to one embodiment of the present invention, the notching areas are present in each layer of the negative electrode structure (10) in a structure in which the negative electrode structure (10) and the positive electrode (20) are alternately stacked, and the notching areas in each layer are located side by side in the height direction of the electrode assembly (1). As described above, in the negative electrode structure (10), the upper separator and the lower separator have a substantially symmetrical structure, so that the negative electrode (12) is exposed to the upper and lower sides by the notching areas in each layer. Furthermore, as shown in FIG. 3b, when the notching areas of each layer are positioned side by side in the height direction of the electrode assembly (1), it is easy to connect the negative electrode tabs of each layer together by welding or the like.

According to one embodiment of the present invention, the positive electrode (20) comprises a positive electrode tab protruding more than the negative electrode structure (10). The positive electrode tab protrudes more in a lengthwise or widthwise direction than the negative electrode structure (10), and the positive electrode (20) of the electrode assembly (1) can be electrically connected via the protruding positive electrode tab. Since the positive electrode (20) is made of a different material, it does not form a tab in the same manner as the negative electrode tab according to one embodiment of the present invention, and is not particularly limited as long as it is commonly used in the art. In this specification, the positive electrode tab is viewed as one configuration included in the positive electrode (20), and refers to a portion protruding widthwise from the separator (11) of the negative electrode structure (10), as shown in FIG. 3a.

According to one embodiment of the present invention, the notching area has a rectangular shape. The notching area may be manufactured in various shapes, but a rectangular shape such as that shown in FIG. 3a is typical. According to one embodiment of the present invention, the length of the notching area is at least 1.5 times the length of the positive electrode tab. The length of the notching area and positive electrode tab may be the same at all locations if the notching area is rectangular in shape, but otherwise the length is based on an average value for the length at all locations. Specifically, the length of the notching area may be 1.5 times or more, 1.6 times or more, 1.7 times or more, 1.8 times or more, 1.9 times or more, 2.0 times or more, based on the length of the positive electrode tab. In one embodiment of the invention, the negative electrode tabs are manufactured by notching of the separator, so that they do not have a typical protruding shape like the positive electrode tabs. The negative electrode tab may be joined with the negative electrode tab formed on another layer by welding or the like, in which case, if the length of the notching area is sufficiently secured to secure the negative electrode tab, it may be easy to join the negative electrode tab without bonding by utilizing the ductility of the lithium metal that is not fixed by the separator. Since the notching area is formed in a portion that does not overlap with the positive electrode tab, the length of the notching area may be limited. Unlike the length of the notching area, the width of the notching area is directly related to the area that can be applied with the positive electrode in the electrode assembly, so it is appropriately adjusted for the performance of the battery, and may be desirable to minimize the width of the notching area if it can only function as a negative electrode tab.

According to one embodiment of the present invention, the notching area is located only at one end of both ends in the width direction of the negative electrode structure (10). In that the negative electrode structure (10) may extend in the length direction, it may be advantageous in terms of process for the notching area to be located at the end in the width direction. Even if the notching area is located at one end of both ends, there is no significant difference in terms of functionality between being located at one end and being located at both ends; rather, being located at one end of both ends may be preferable in terms of simplifying the process. For the same reason, the positive electrode tab may also be located at one of the two ends, in which case the notching area and the positive electrode tab may be oriented in the same direction or in different directions.

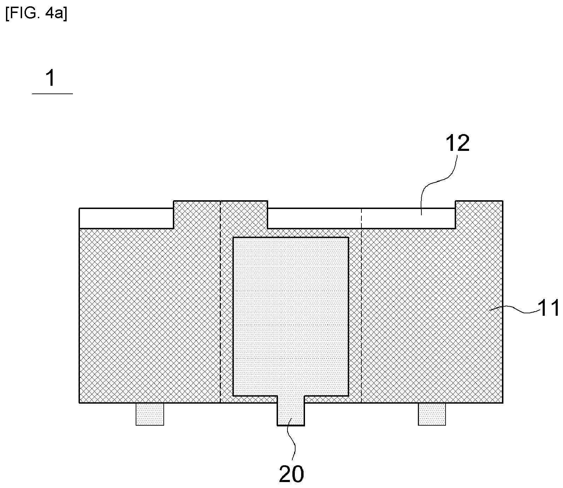

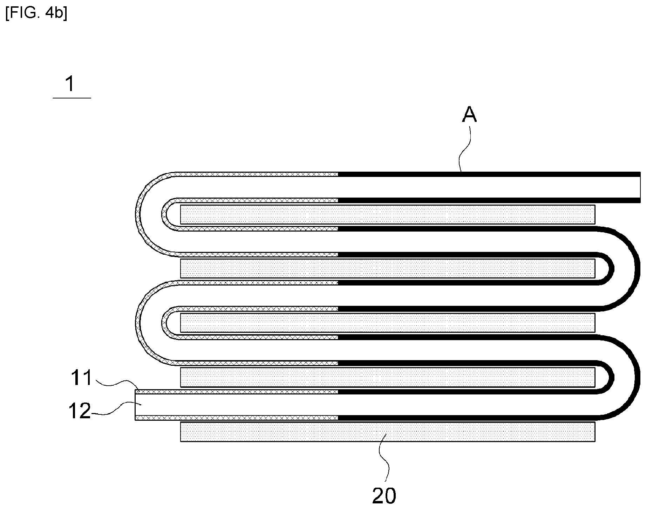

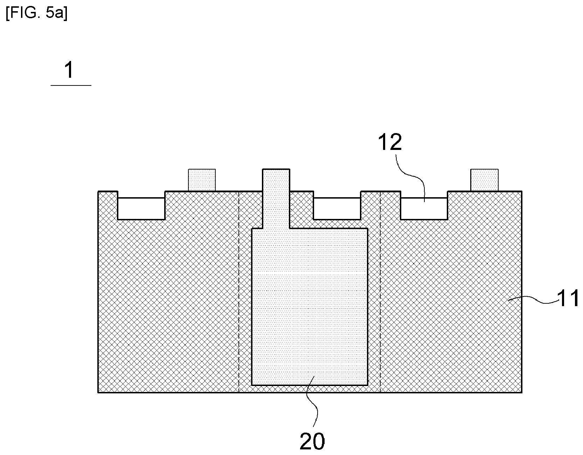

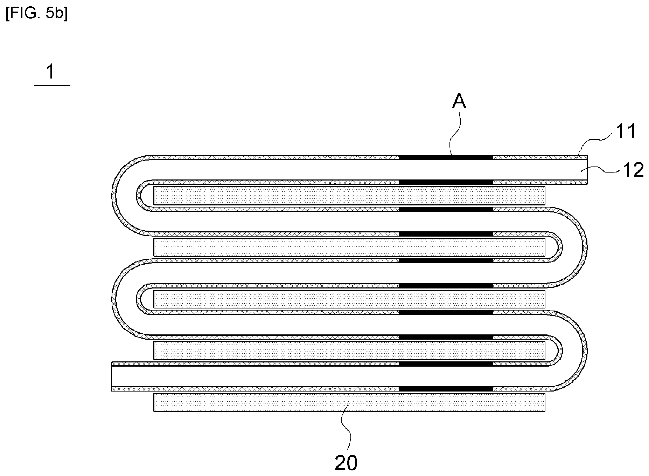

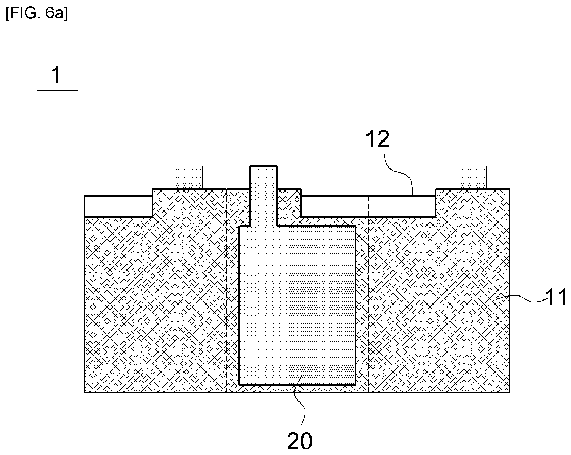

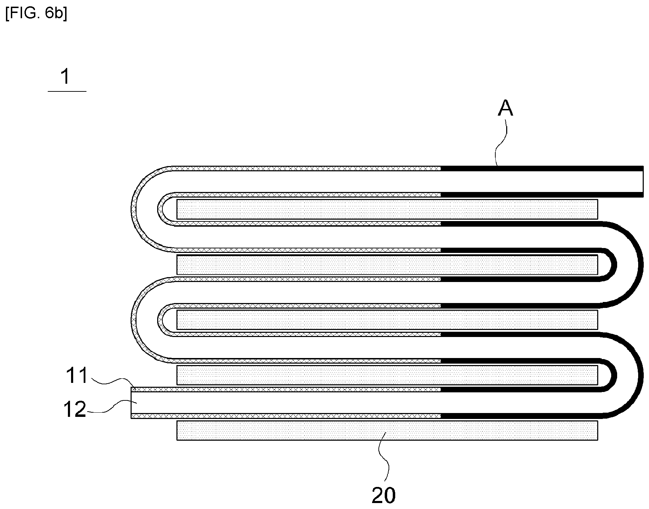

FIGs. 3 to 6 illustrate an electrode assembly with an exemplary negative electrode structure (10) and a positive electrode (20) arranged in accordance with one embodiment of the present invention. In FIGs. 3 and 4, the notching area and the positive electrode tab are positioned in opposite directions. When the notching area and the positive electrode tab are located in opposite directions, they do not overlap each other, which have the advantage that their positions can be freely arranged, and both of them can be centered in the longitudinal direction. In FIGs. 5 and 6, the notching area and the positive electrode tab are located in the same direction. When the notching area and the positive electrode tab are located in the same direction, there is a structural advantage that the negative and positive tabs can be located on one side.

According to one embodiment of the present invention, the electrode assembly (1) comprises one negative electrode structure (10) and a plurality of positive electrodes (20). The negative electrode structure (10) may be applied to the electrode assembly (1) with the same number of cuts as the positive electrodes (20), but this may increase the number of cuts of the negative electrode comprising the lithium metal, thereby reducing the effectiveness of the present invention. Therefore, in one embodiment of the present invention, only one negative electrode structure (10) is applied to the electrode assembly (1) by extending the negative electrode structure (10) in the longitudinal direction. Proper folding of the negative electrode structure (10) may be important in order to create a laminated structure with a plurality of layers as a single negative electrode structure (10).

According to one embodiment of the present invention, the negative electrode structure (10) comprises a plurality of stack portions and a plurality of folding portions. In the negative electrode structure (10), the stack portions and the folding portions are units that separate positions with different functionalities along the longitudinal direction of the negative electrode structure (10). The stack portion and the folding portion are not distinguished by a material other than position. To facilitate understanding of the positions of the stack and folding portions, FIG. 3b shows the positions of the stack portion (10S) and the folding portion (10F) in an example. The stack portion (10S) refers to the negative electrode structure (10) at the position where the positive electrode (20) is stacked, and has a predominantly straight shape as shown in FIG. 3b. The length of the stack portion (10S) is substantially the same as the length of the positive electrode. The folding portion (10F) refers to the negative electrode structure (10) at a position connecting the stack portion (10S) and the stack portion (10S), and has a predominantly curved shape as shown in FIG. 3b. According to one embodiment of the present invention, in the negative electrode structure (10), the stack portion (10S) and the folding portion (10F) are alternately positioned. In other words, the stack portion may be separated by the folding portion, and the folding portion may be separated by the stack portion.

According to one embodiment of the present invention, the electrode assembly (1) comprises a structure in which the stack portion (10S) of the negative electrode structure (10) and the positive electrode (20) are stacked alternately and sequentially. Since the electrode assembly (1) includes a structure in which the stack portion (10S) of the negative electrode structure (10) and the positive electrode (20) are stacked alternately and sequentially, the negative electrode structure (10) including the stack portion (10S) and the folding portion (10F) in such a structure has a zigzag shape as shown in FIG. 3a. In other words, the folding portions (10F), which are located sequentially from the stack portion (10S) of the negative electrode structure (10) where stacking begins, are located alternately on the left or right side of the electrode assembly (1). If the stack portion (10S) of the negative electrode structure (10) and the positive electrode (20) are not stacked alternately, and if two or more stack portions or positive electrodes are stacked consecutively, a potential difference may not be generated between the consecutively stacked layers, and the efficiency of the battery may be reduced.

The electrode assembly according to one embodiment of the present invention may have an arrangement as shown in FIGs. 3a and 3b. According to the arrangement, the positive electrode tab is located in a direction opposite to the notching area with respect to the width direction of the electrode assembly (1). As in FIG. 3a, in the arrangement, the positive electrode tab may be positioned side by side with the notching area in the width direction of the electrode assembly, and the position may be centered in the length direction of the stack portion (10S). By positioning the positive electrode (20) from a position some distance apart in the width direction from the notching area, the positive electrode (20) and the negative electrode (12) do not overlap. In this case, as shown in FIG. 3b, the notching portion (A) is positioned side by side in the height direction of the electrode assembly (1) at a center position of the stack portion.

The electrode assembly according to one embodiment of the present invention may have an arrangement as shown in FIGs. 5a and 5b. According to the arrangement, the positive electrode tab is located in the same direction as the notching area with respect to the width direction of the electrode assembly (1). In the above arrangement, as in FIG. 3a, the positive electrode tab is stacked at a different position in the length direction from the notching area, and in the electrode assembly as in FIG. 3b, the positive electrode tab (not shown in the drawing) is not overlapped with the notching area (or notching portion (A)) with respect to the height direction of the electrode assembly, and the positive electrode tabs may overlap with another and the notching area may overlap with another. In this case, it may be difficult to make efficient use of space if the notching areas or positive electrode tabs are located in the center of the stack portion.

According to one embodiment of the present invention, the notching area extends in the longitudinal direction of the negative electrode structure and extends from one stack portion to the proximate other stack portion. In order for the notching area to extend from one stack portion to the proximate other stack portion, one stack portion and the other stack portion are connected by a folding portion, and the notching area passes through the entirety of the folding portion. In this regard, if the positive tab is located in a direction opposite to the notching area relative to the width direction of the electrode assembly (1), the exemplary electrode assembly (1) may have a structure as shown in FIGs. 4a and 4b. In this case, since there is no positive electrode tab in the length direction of the negative electrode structure relative to the notching area, the direction in which the notching area extends is not particularly limited, and may extend in a left or right direction. If the positive electrode tab is located in the same direction as the notching area relative to the width direction of the electrode assembly (1), the exemplary electrode assembly (1) may have a structure as shown in FIGs. 6a and 6b. In this case, since the positive electrode tab is present in the length direction of the negative electrode structure relative to the notching area, the direction in which the notching area extends may be opposite to the direction in which the positive electrode tab is present.

According to one embodiment of the present invention, the plurality of notching areas are located side by side in the height direction of the electrode assembly (1), even though the notching areas extend from one stack portion to the proximate other stack portion. In the electrode assembly according to one embodiment of the present invention, the notching areas are positioned side by side to join the negative electrode tabs of each layer together by welding or the like. In this case, if even the folding portion is notched, the flexibility of the negative electrode tab to be joined is increased and the negative electrode tab can be joined more easily.

In terms of the flexibility of the negative electrode tab, it may be desirable to make the notching area as long as possible, but a highly flexible negative electrode tab may cause defects in the manufacture of the electrode assembly. Therefore, the notching area is preferably controlled within a suitable range. According to one embodiment of the present invention, the length of the notching area in the negative electrode structure is 70% or less of the length of the stack portion. This may mean 70% or less of the length of the negative electrode structure in one layer when a plurality of cut negative electrode structures are applied. Specifically, the length of the notching area may be 70% or less, 69% or less, 68% or less, 67% or less, 66% or less, 65% or less, 64% or less, 63% or less, 62% or less, 61% or less, 60% or less of the length of the stack portion. By having a separator that is not notched above a certain level, the electrode assembly may have a more stable structure.

According to one embodiment of the present invention, the negative electrode structure further comprises a wrapping portion (not shown in the drawing) in addition to the stack portion (10S) and the folding portion (10F). By wrapping the stack portions of negative electrode structures and the positive electrode once through the wrapping portion, the electrode assembly can have a more stable structure. The wrapping portion may have a mixture of straight and curved shapes.

According to one embodiment of the present invention, the positive electrode (20) comprises a positive electrode active material layer and a current collector. The positive electrode (20) has a structure in which a positive electrode active material layer is formed on at least one side of the current collector, more specifically on both sides. The positive electrode active material layer comprises a positive electrode active material, and may further comprise a conductive material, a binder, and an additive. The current collector, the positive electrode active material, the conductive material, the binder, and the additive are not particularly limited as long as they are commonly used in the art.

The positive electrode current collector supports a positive electrode active material, which is not particularly limited as long as it has a high conductivity without causing any chemical changes in the battery. According to one embodiment of the present invention, the positive electrode current collector may be made of copper, stainless steel, aluminum, nickel, titanium, palladium, calcined carbon, copper or stainless steel surface treated with carbon, nickel, silver, or the like, aluminum-cadmium alloys, and the like.

The positive electrode current collector can form microscopic irregularities on its surface to strengthen the binding force with the positive electrode active material, and various forms can be used, such as films, sheets, foils, meshes, nets, porous bodies, foams, non-woven bodies, etc.

As the positive electrode active material, a lithium-containing transition metal oxide may be used. According to one embodiment of the present invention, any one or a mixture of two or more selected from the group consisting of LiCoO₂, LiNiO₂, LiMnO₂, LiMn₂O₄, Li(NiₐCo_{b}Mn_{c})O₂ (wherein 0<a<1, 0<b<1, 0<c<1, and a+b+c=1), LiNi_{1-y}Co_{y}O₂ (wherein 0<y<1), LiCo_{1-y}Mn_{y}O₂ (wherein 0<y<1), LiNi_{1-y}Mn_{y}O₂ (wherein 0<y<1), Li(NiₐCo_{b}Mn_{c})O₄ (wherein 0<a<2, 0<b<2, 0<c<2, and a+b+c=2), LiMn_{2-z}Ni_{z}O₄ (wherein 0<z<2), LiMn_{2-z}Co_{z}O₄ (wherein 0<z<2), LiCoPO₄ and LiFePO₄ may be used. In addition to these oxides, sulfides, selenides and halides may also be used.

The positive electrode active material may comprise a sulfur compound. According to one embodiment of the present invention, the sulfur compound may be one or more selected from the group consisting of elemental sulfur (S₈), organosulfur compounds Li₂Sₙ (wherein n≥1), and carbon-sulfur polymers ((C₂Sₓ)ₙ, wherein x=2.5 ~ 50, n≥1). Preferably, inorganic sulfur (S₈) may be used.

If the positive electrode active material comprises a sulfur compound, the electrode assembly (1) according to one embodiment of the present invention can be applied in a lithium-sulfur battery. Since the sulfur contained in the positive electrode active material is not electrically conductive alone, it can be used in complex with a conductive material such as a carbon material. Accordingly, the sulfur is included in the form of a sulfur-carbon complex, and preferably, the positive electrode active material may be a sulfur-carbon complex.

In view of the foregoing, the positive electrode (20) is relatively less easily folded and more easily cut compared to the negative electrode. Accordingly, the positive electrode (20) may be cut to a suitable size so that a plurality of positive electrodes are applied inside the electrode assembly (1).

According to one embodiment of the present invention, the negative electrode (12) does not comprise a current collector. Since the negative electrode (12) does not comprise a current collector, the amount of negative electrode active material loaded within the electrode assembly can be improved, which can contribute to improved performance of the battery. In the electrode assembly (1) according to one embodiment of the present invention, the processability can be improved by minimizing cutting while applying the negative electrode in the form of the negative electrode structure (10), since the negative electrode (12) is mainly composed of lithium metal, which may not be easy to process such as cutting due to the large ductility and viscosity of the lithium metal.

The separator (11) covering both sides of the negative electrode (12) in the negative electrode structure (10) is not particularly limited in type, provided that it does not contain a binder on its surface. The separator (11) may be, but is not limited to, for example, a nonwoven material made of a high melting point glass fiber or a polyethylene terephthalate fiber, or a polyolefin-based porous material. Since the separator (11) is much more processable than the negative electrode (12) of lithium metal, in the present invention, the negative electrode tab is manufactured by notching the separator (11).

The material of the porous substrate is not particularly limited by the present invention, but any porous substrate conventionally used in electrochemical devices can be used. According to one embodiment of the present invention, the porous substrate may include at least one material selected from the group consisting of polyolefin such as polyethylene or polypropylene, polyester such as polyethyleneterephthalate or polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole), and polyarylate.

According to one embodiment of the present invention, in the negative electrode structure (10), the separator (11) and the negative electrode (12) have the same length. The separator (11) and the negative electrode (12) are supplied to the electrode assembly in the form of a negative electrode structure (10) with the negative electrode (12) interposed between two notched separators (11), wherein the negative electrode is cut once at the same time as the separator, so that the lengths of the separator (11) and the negative electrode (12) in the negative electrode structure (10) are substantially the same. However, depending on the method of cutting the negative electrode structure (10), there may be a slight difference in the length of the separator (11) and the negative electrode (12), and in some cases, the end of the separator (11) may be bent toward the center of the negative electrode structure (10). Even if the negative electrode structure (10) has substantially the same length of the separator (11) and the negative electrode (12) during the feeding process, when applied to the electrode assembly (1), the length of the lithium metal may be extended due to the ductility of the lithium metal during the folding process.

In that the electrode assembly (1) according to one embodiment of the present invention is formed by folding one negative electrode structure (10) to form the basic structure of the electrode assembly (1), the negative electrode structure (10) should not be excessively thick in thickness so that it can be flexibly folded, and a certain level of lithium metal, the negative electrode active material, should be secured in the negative electrode structure (10) in consideration of the performance of the battery. According to one embodiment of the present invention, the thickness of the lithium metal in the negative electrode structure (10) accounts for 50% to 90% based on the total thickness of the negative electrode structure (10). More specifically, the thickness of the lithium metal may be 50% to 90%, more specifically 55% to 85%, more specifically 60% to 80%. If the lithium metal satisfies the above-described thickness range, it may help to improve the processability and functionality of the electrode assembly. According to one embodiment of the present invention, since the negative electrode structure (10) does not include a separate current collector, the thickness of the remaining portion except the thickness of the lithium metal may refer to the thickness of the two separators.

According to one embodiment of the present invention, the thickness of the lithium metal may be 10 µm to 90 µm. Specifically, the thickness of the lithium metal may be 10 µm or more, 20 µm or more, or 30 µm or more, and may be 70 µm or less, 80 µm or less, or 90 µm or less. The thickness of the lithium metal is not necessarily limited thereto, and may be adjusted appropriately depending on the actual size of the battery.

In the electrode assembly (1) according to one embodiment of the present invention, unlike the negative electrode structure (10), the positive electrode is cut in consideration of characteristics such as material and applied between the stack portions (10S) of the negative electrode structure (10). The positive electrode is distinct and independent from the negative electrode by including a current collector in addition to the positive electrode active material, but its thickness may be adjusted in relation to the negative electrode or the negative electrode structure in consideration of the performance of the electrode or the like. According to one embodiment of the present invention, the thickness of the positive electrode (20) has a thickness of 100% to 400% based on the thickness of the negative electrode structure (10). More specifically, the thickness of the positive electrode (20) may be 100% to 400%, more specifically 150% to 350%, and more specifically 200% to 300%. When the positive electrode satisfies the above-described thickness range, it can be suitably matched with the negative electrode structure.

An electrode assembly according to one embodiment of the present invention is applied to an electrochemical device. The electrochemical device may comprise any device that performs an electrochemical reaction. For example, the electrochemical device may be any kind of primary battery, secondary battery, fuel battery, solar battery, or capacitor. If the electrochemical device is a secondary battery, the electrochemical device may be a lithium secondary battery, and the lithium secondary battery may include a lithium metal secondary battery, a lithium ion secondary battery, a lithium polymer secondary battery, or a lithium ion polymer secondary battery.

### [Reference Numerals]

1: Electrode assembly
10: Negative electrode structure
10S: Stack portion
10F: Folding portion
11: Separator
12: Negative electrode (comprising a lithium metal)
20: Positive electrode
A: Notching portion

## Claims

1. An electrode assembly comprising a positive electrode, a negative electrode, and a separator,
wherein the negative electrode comprises lithium metal, and is interposed between two notched separators to form a negative electrode structure,
wherein the electrode assembly comprises a negative electrode structure and a positive electrode alternately stacked,
wherein, in the negative electrode structure, the negative electrode is exposed to the outside through a notching area of the separator.

2. The electrode assembly according to claim 1, wherein the notching areas are present for each layer of negative electrode structures in a structure in which the negative electrode structures and positive electrodes are alternately stacked, and the notching areas of each layer are located side by side in a height direction of the electrode assembly.

3. The electrode assembly according to claim 1, wherein the positive electrode comprises a positive electrode tab that protrudes above the negative electrode structure.

4. The electrode assembly according to claim 3, wherein the notching area has a rectangular shape, and the length of the notching area is at least 1.5 times the length of the positive electrode tab.

5. The electrode assembly according to claim 3, wherein the notching area is located at only one end of the two ends in the width direction of the negative electrode structure.

6. The electrode assembly according to claim 5, wherein the positive electrode tab is located in the same direction as the notching area relative to the width direction of the electrode assembly, and the positive electrode tab does not overlap with the notching area relative to a height direction of the electrode assembly.

7. The electrode assembly according to claim 5, wherein the positive electrode tab is located in an opposite direction to the notching area relative to the width direction of the electrode assembly, and the positive electrode tab is located side-by-side with the notching area in the width direction of the electrode assembly.

8. The electrode assembly according to claim 1, wherein the electrode assembly comprises a single negative electrode structure and a plurality of positive electrodes,
wherein the negative electrode structure includes a plurality of stack portions and a plurality of folding portions,
wherein, in the negative electrode structure, the stack and folding portions are located alternately,
wherein the electrode assembly comprises a structure in which a stack portion of the negative electrode structure and a positive electrode are alternatively and sequentially stacked.

9. The electrode assembly according to claim 8, wherein the notching area extends in a longitudinal direction of the negative electrode structure and extends from one stack portion to the proximate other stack portion.

10. The electrode assembly according to claim 1, wherein the length of the notching area in the stack portion of the negative electrode structure is 70% or less of the length of the stack portion.

11. An electrochemical device comprising an electrode assembly according to claim 1.

12. The electrochemical device according to claim 11, wherein the electrochemical device is a lithium secondary battery.
